# FASCICULE DE BREVET EUROPEEN

(11) **EP 2 122 222 B1**
(45) Date de publication et mention de la délivrance du brevet: **06.06.2012**
(21) Numéro de dépôt: 08775583.1
(22) Date de dépôt: 21.02.2008
(51) Int. Cl.: F16L 37/35

(54) **ELEMENT DE RACCORD A SOUPAPE D'OBTURATION ET RACCORD INCORPORANT UN TEL ELEMENT**
VERBINDUNGSELEMENT MIT ABSPERRVENTIL UND VERBINDUNG MIT DEM ELEMENT
CONNECTION MEMBER WITH STOP VALVE AND CONNECTION INCLUDING SUCH MEMBER

(30) Priorité: 22.02.2007 FR 0701273
(43) Date de publication de la demande: 25.11.2009
(73) Titulaire: Staubli Faverges, 74210 Faverges (FR)
(72) Inventeur: TIBERGHIEN, Alain-Christophe, F-74320 Sevrier (FR); DURIEUX, Christophe, F-73200 Gilly sur Isère (FR)
(74) Mandataire: Myon, Gérard Jean-Pierre
(86) Numéro de dépôt international: PCT/FR2008/000227
(87) Numéro de publication internationale: WO 2008/122712

(56) Documents cités:
- EP-A- 0 477 949
- FR-A- 2 409 445
- US-A- 2 854 259
- US-A- 6 161 578

## Description

La présente invention a trait à un élément de raccord destiné à la jonction amovible de canalisations parcourues par un fluide sous pression, cet élément comprenant un poussoir et une soupape d'obturation apte à coulisser axialement par rapport au poussoir pour l'accouplement de l'élément avec un élément de raccord correspondant. L'invention a également trait à un raccord incorporant un tel élément.

Dans le domaine des raccords hydrauliques à poussoirs et soupapes d'obturation, il est connu d'assurer l'étanchéité d'un élément de raccord, en configuration désaccouplée de cet élément, au moyen d'un joint logé à l'interface entre le poussoir et la soupape. Lors de l'accouplement de l'élément avec un élément correspondant, le coulissement de la soupape par rapport au poussoir positionne le joint d'étanchéité en contact avec la veine de circulation du fluide dans le raccord. Dans le cas de débits de fluide importants, il existe alors un risque que le joint d'étanchéité soit expulsé hors de son logement en configuration accouplée du raccord, ce qui peut générer des problèmes d'étanchéité au désaccouplement.

EP-A-0 477 949 décrit un raccord à poussoirs et soupapes d'obturation dans lequel certains joints assurant l'étanchéité entre les poussoirs et les soupapes en configuration désaccouplée sont, en configuration accouplée du raccord, protégés de la veine de fluide par le poussoir de l'un des éléments du raccord. Les joints précités sont également utilisés pour assurer l'étanchéité du raccord en configuration accouplée. A cet effet, ces joints sont prévus pour être en contact avec le poussoir qui les protège de la veine de fluide en configuration accouplée du raccord, ce qui, en cas de micromouvements relatifs des éléments du raccord accouplé, génère des frottements à l'interface entre ces joints et le poussoir de protection. De tels micromouvements relatifs peuvent notamment intervenir lorsque le verrouillage des éléments du raccord est réalisé non pas au moyen de billes, tel que décrit dans EP-A-0 477 949, mais au moyen de plaques comprenant des connexions multiples. En effet, les éléments de raccord ne sont alors pas immobilisés axialement en butée l'un par rapport à l'autre, afin de ne pas contrarier le verrouillage des plaques, et sont susceptibles de s'éloigner ou de se rapprocher axialement l'un de l'autre si, par exemple, certaines connexions des plaques sont soumises à des vibrations ou conduisent des fluides de chaleurs différentes. Les frottements résultants, à l'interface entre les joints et le poussoir de protection, entraînent une détérioration de la qualité de l'étanchéité et de la durée de vie des joints.

US-A-2,854,259 décrit également un raccord à poussoirs et soupapes d'obturation dans lequel des joints assurant l'étanchéité entre les poussoirs et les soupapes en configuration désaccouplée sont protégés de la veine de fluide par le poussoir de l'un des éléments de raccord en configuration accouplée du raccord. Lors de l'accouplement et du désaccouplement des éléments de raccord, les joints précités sont amenés à progresser axialement par rapport à la surface périphérique externe du poussoir de protection. Le poussoir de protection est prévu avec un diamètre extérieur inférieur au diamètre intérieur des joints dans leur géométrie de repos. Toutefois, le poussoir de protection comporte des orifices sur sa surface périphérique, qui sont destinés à l'écoulement du fluide dans le raccord en configuration accouplée et au niveau desquels les joints sont susceptibles d'être déformés sous l'effet de la pression du fluide. En particulier, les joints sont susceptibles d'être amenés au contact des arêtes de ces orifices lors de l'accouplement des éléments de raccord. Il en résulte des efforts de frottement importants exercés sur les joints à chacun de leurs passages au niveau des orifices du poussoir de protection, et donc une usure prématurée des joints et une détérioration de la qualité de l'étanchéité.

US-A-2,854,259 décrit donc un élément femelle de raccord selon le préambule de la revendication 1.

C'est à ces inconvénients qu'entend plus particulièrement remédier l'invention en proposant un élément de raccord à poussoir et soupape d'obturation, comprenant au moins un joint propre à assurer l'étanchéité de l'élément en configuration désaccouplée, cet élément garantissant en outre une bonne stabilité de ce joint en configuration accouplée de l'élément, sans détérioration de l'efficacité et de la durée de vie du joint.

A cet effet, l'invention a pour objet un élément femelle ou mâle de raccord destiné à la jonction amovible de canalisations parcourues par un fluide sous pression, cet élément femelle ou mâle étant apte à être accouplé avec un élément mâle ou femelle de raccord correspondant, l'élément femelle ou mâle comprenant un poussoir et une soupape d'obturation apte à coulisser axialement par rapport au poussoir pour l'accouplement de l'élément, l'élément femelle ou mâle comprenant en outre au moins un joint d'étanchéité, reçu dans une gorge périphérique d'une première pièce parmi le poussoir ou la soupape et propre à coopérer de manière étanche avec une première partie de la deuxième pièce parmi le poussoir ou la soupape en configuration désaccouplée de l'élément, alors que, en configuration accouplée de l'élément, une pièce de protection du joint, appartenant à l'élément, est intercalée radialement entre le joint et une veine principale de circulation du fluide dans l'élément, la pièce de protection étant une deuxième partie de la deuxième pièce, les première et deuxième parties de la deuxième pièce étant de dimensions radiales différentes et l'épaisseur radiale disponible pour le joint en configuration accouplée de l'élément étant supérieure à l'épaisseur radiale disponible pour le joint en configuration désaccouplée de l'élément, les première et deuxième parties de la deuxième pièce étant reliées l'une à l'autre par des pattes de raccordement, caractérisé en ce que chaque patte de raccordement est de section transversale constante sur toute sa longueur.

Selon d'autres caractéristiques avantageuses d'un élément de raccord conforme à l'invention :
- un diamètre du joint logé dans une gorge périphérique de la pièce sur laquelle il est monté et un diamètre de la pièce de protection sont tels que le joint n'est pas en contact avec la pièce de protection en configuration accouplée de l'élément ;
- la partie de la deuxième pièce délimitée par les pattes de raccordement est au moins partiellement de dimensions radiales égales à celles de la deuxième partie ;
- la deuxième pièce comporte trois pattes de raccordement régulièrement réparties sur la périphérie de la deuxième pièce ;
- le joint est reçu dans une gorge périphérique interne de la soupape et coopère de manière étanche avec une surface périphérique externe d'une partie pleine du poussoir en configuration désaccouplée de l'élément, la pièce de protection étant une partie creuse du poussoir, les parties pleine et creuse du poussoir étant reliées par les pattes de raccordement, la partie pleine étant de dimensions radiales supérieures à celles de la partie creuse ;
- la partie pleine du poussoir comporte une portion conique disposée dans un canal principal d'écoulement du fluide dans l'élément ;
- la deuxième pièce comporte, au niveau de sa première partie, au moins un orifice qui débouche radialement à une position qui est comprise, selon la direction longitudinale de l'élément, entre l'extrémité avant de la deuxième pièce et l'extrémité avant des pattes de raccordement ;
- chaque orifice de la deuxième pièce est débouchant au niveau d'une portion de la deuxième pièce qui est de dimensions radiales égales à celles de la deuxième partie de la deuxième pièce ;
- chaque orifice de la deuxième pièce a une section transversale supérieure à la section transversale d'un interstice radial délimité entre la deuxième pièce et une pièce adjacente à la deuxième pièce lors de l'accouplement de l'élément avec un élément de raccord correspondant ;
- l'élément comprend un autre joint d'étanchéité, fixe par rapport à un corps de l'élément et destiné à assurer l'étanchéité du raccord obtenu par accouplement de l'élément avec un élément de raccord correspondant ;
- la face avant de l'élément définie par les faces avant du poussoir et de la soupape en configuration désaccouplée de l'élément est sensiblement plane.

L'invention a également pour objet un raccord pour la jonction amovible de canalisations parcourues par un fluide sous pression, comprenant un élément femelle et un élément mâle aptes à être accouplés l'un avec l'autre, au moins un des éléments du raccord étant tel que décrit ci-dessus.

Selon d'autres caractéristiques avantageuses d'un raccord conforme à l'invention :
- le deuxième élément du raccord comprend un poussoir et une soupape d'obturation apte à coulisser axialement par rapport au poussoir pour l'accouplement des deux éléments du raccord, le deuxième élément comprenant en outre au moins un joint d'étanchéité, monté sur une pièce parmi le poussoir ou la soupape du deuxième élément et propre à assurer l'étanchéité entre le poussoir et la soupape en configuration désaccouplée du deuxième élément, la pièce de protection du premier élément étant intercalée radialement, en configuration accouplée du raccord, entre le joint du deuxième élément et une veine principale de circulation du fluide dans le raccord, l'épaisseur radiale disponible pour le joint du deuxième élément en configuration accouplée du raccord étant supérieure à l'épaisseur radiale disponible pour le joint du deuxième élément en configuration désaccouplée du deuxième élément ;
- le poussoir du premier élément est propre à coopérer avec la soupape du deuxième élément, et le poussoir du deuxième élément avec la soupape du premier élément, pour l'accouplement des deux éléments du raccord ;
- la distance axiale entre une extrémité arrière d'une gorge de réception du joint du deuxième élément et une extrémité arrière d'une portion d'obturation de la pièce du deuxième élément sur laquelle est monté le joint est supérieure ou égale à la distance axiale entre les première et deuxième parties de la pièce du premier élément formant la pièce de protection ;
- chaque élément du raccord est solidaire d'une plaque, le raccord étant apte à être verrouillé en configuration accouplée par une solidarisation des plaques des deux éléments.

Les caractéristiques et avantages de l'invention apparaîtront dans la description qui va suivre de trois modes de réalisation d'un élément de raccord et d'un raccord selon l'invention, donnée uniquement à titre d'exemple et faite en se référant aux dessins annexés dans lesquels :
- la figure 1 est une coupe longitudinale d'un raccord conforme à un premier mode de réalisation de l'invention, en configuration désaccouplée de ses éléments mâle et femelle ;

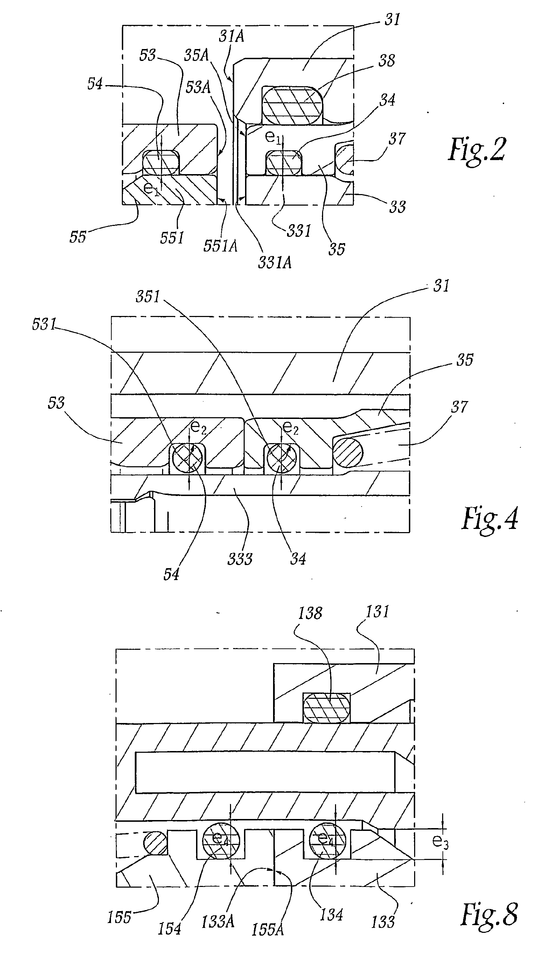

- la figure 2 est une vue à plus grande échelle du détail II de la figure 1 ;
- la figure 3 est une coupe longitudinale du raccord de la figure 1, selon un plan perpendiculaire au plan de coupe de la figure 1, en configuration accouplée des éléments mâle et femelle ;
- la figure 4 est une vue à plus grande échelle du détail IV de la figure 3 ;
- la figure 5 est une vue en perspective à plus grande échelle du poussoir de l'élément femelle du raccord de la figure 1 ;
- la figure 6 est une vue en perspective à plus grande échelle de la soupape d'obturation de l'élément mâle du raccord de la figure 1 ;
- la figure 7 est une coupe analogue à la figure 3 pour un raccord conforme à un deuxième mode de réalisation de l'invention ;
- la figure 8 est une vue à plus grande échelle du détail VIII de la figure 7 ;
- la figure 9 est une coupe analogue à la figure 1 pour un raccord conforme à un troisième mode de réalisation de l'invention, lors de l'accouplement de ses éléments mâle et femelle ; et
- la figure 10 est une section selon la ligne X-X de la figure 9.

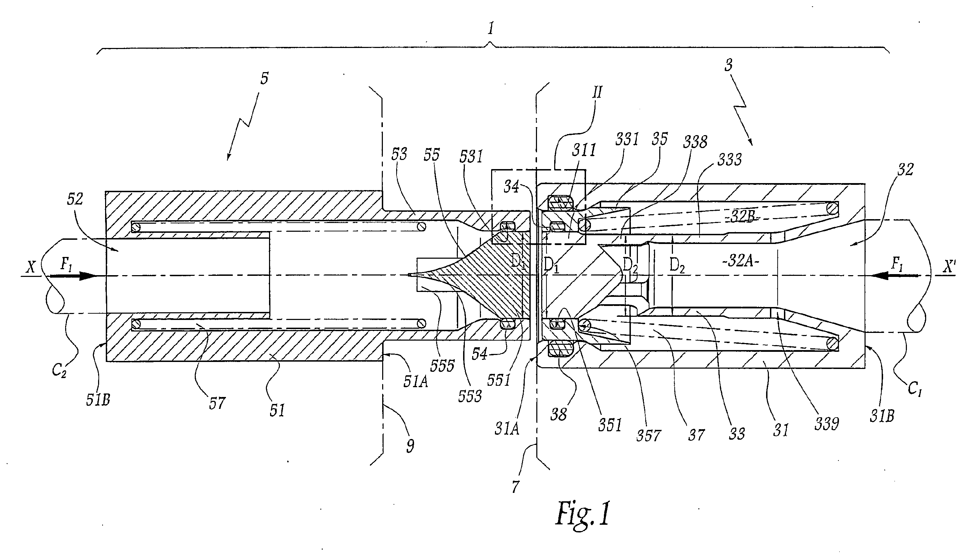

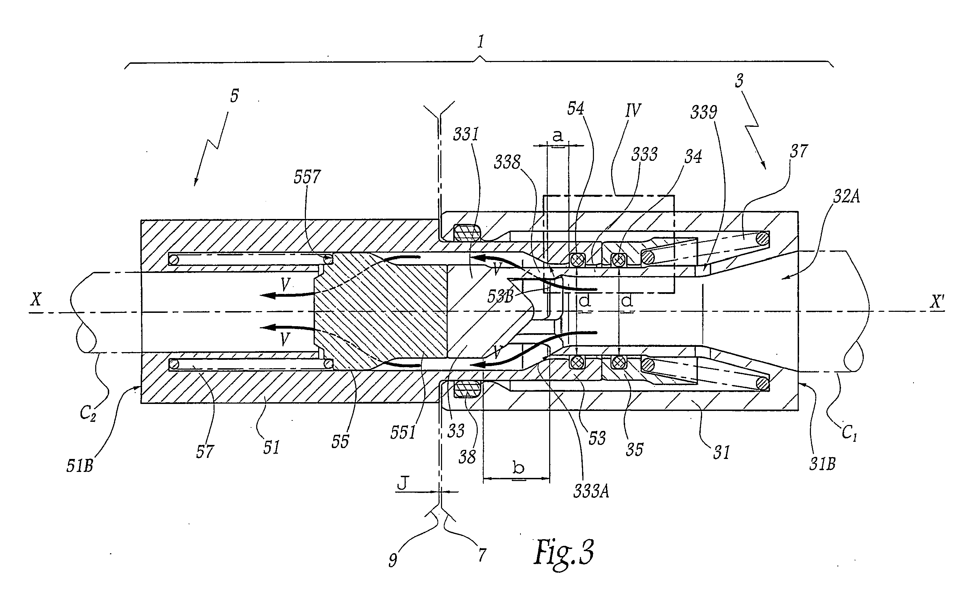

Le raccord 1 représenté aux figures 1 et 3 comprend un élément femelle 3 et un élément mâle 5, prévus pour s'emmancher l'un dans l'autre dans la direction d'un axe d'emmanchement X-X', qui est un axe longitudinal commun aux éléments 3 et 5. Au sens de l'invention, « l'avant » de l'élément 3 ou 5 désigne la partie de cet élément destinée à être dirigée vers l'autre élément pour obtenir l'emmanchement, « l'arrière » de l'élément étant la partie opposée. Par extension, « l'avant » d'une pièce constitutive de l'élément 3 ou 5 désigne la partie de cette pièce dirigée vers l'avant de l'élément.

L'élément femelle 3 comprend un corps 31 tubulaire à section circulaire, qui définit un volume intérieur 32 débouchant aux deux extrémités avant 31A et arrière 31 B du corps 31. Une canalisation amont C₁ est reliée au volume intérieur 32 au niveau de l'extrémité arrière 31 B du corps 31, alors qu'un poussoir 33, solidaire du corps 31, est disposé dans le volume intérieur 32. Le poussoir 33 délimite, dans le volume intérieur 32 du corps 31, un canal principal 32A d'écoulement de fluide, à l'intérieur du poussoir, et un volume annulaire 32B, à l'extérieur du poussoir. Sur les figures 1 et 3, le poussoir 33 est représenté monobloc avec le corps 31. Ces parties de l'élément 3 peuvent toutefois être formées par deux pièces distinctes assemblées entre elles.

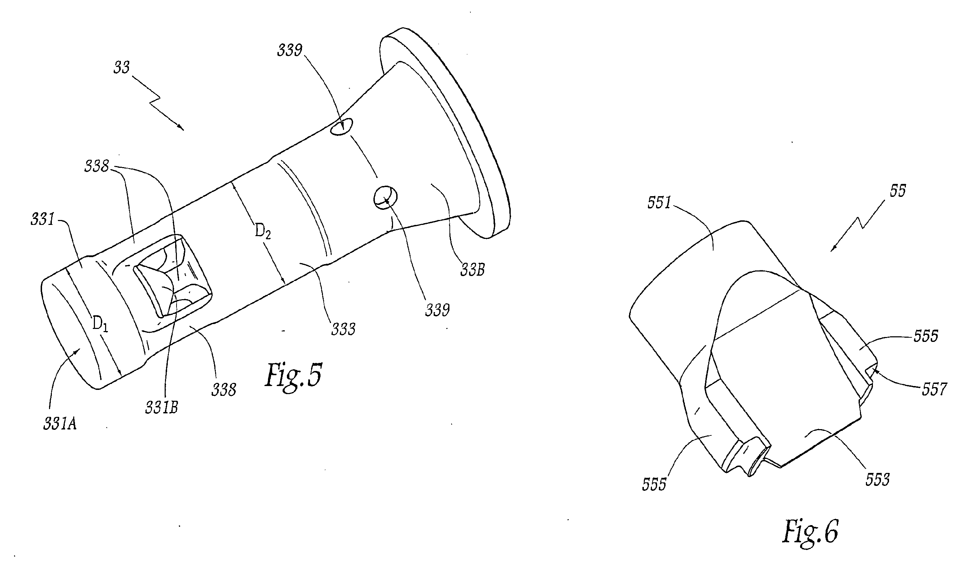

Le poussoir 33 comprend une partie pleine 331 et une partie creuse 333, reliées l'une à l'autre par trois pattes 338 de raccordement régulièrement réparties sur la périphérie externe du poussoir 33. La partie pleine 331 est à section circulaire et définit une face avant 331A sensiblement plane du poussoir. Comme visible sur la figure 5, une portion arrière 331B de la partie pleine 331, qui fait saillie dans le volume délimité par les pattes 338, présente une forme conique et s'évase en direction de la face avant 331A du poussoir 33. Une telle géométrie conique de la partie pleine 331, disposée dans le canal principal 32A d'écoulement du fluide en configuration accouplée du raccord 1, est prévue pour faciliter l'écoulement du fluide, notamment dans le cas de débits de fluide élevés.

La partie creuse 333 du poussoir femelle 33 est tubulaire à section circulaire. Le poussoir femelle 33 comporte des évents 339 percés dans une paroi périphérique de l'extrémité arrière 33B du poussoir, à l'arrière de la partie creuse 333.

Le diamètre extérieur D₁ de la partie pleine 331 est supérieur au diamètre extérieur D₂ de la partie creuse 333. Les pattes 338 de raccordement entre les parties 331 et 333 définissent une enveloppe cylindrique de même diamètre extérieur D₂ que la partie creuse 333. Chaque patte 338, qui s'étend sensiblement parallèlement à l'axe X-X', est obtenue par fraisage et présente une section transversale constante sur toute sa longueur. De telles pattes 338 à section constante limitent les perturbations de l'écoulement du fluide.

L'élément femelle 3 comprend également une soupape 35 tubulaire à section circulaire, disposée dans le volume annulaire 32B défini entre le poussoir 33 et le corps 31. La soupape 35 est mobile en translation, par rapport au corps 31 et au poussoir 33, parallèlement à l'axe X-X'. Un ressort 37 exerce sur un épaulement interne 357 de la soupape 35 un effort élastique de sorte qu'une face avant 35A sensiblement plane de la soupape 35 est sensiblement alignée avec la face avant 331A du poussoir 33 en configuration désaccouplée de l'élément 3. La face avant de l'élément femelle 3, définie par les faces avant 331A du poussoir 33 et 35A de la soupape 35, est alors sensiblement plane. La soupape 35 est pourvue d'une gorge périphérique interne 351 de réception d'un joint torique 34, propre à assurer l'étanchéité entre le poussoir 33 et la soupape 35 en configuration désaccouplée de l'élément femelle 3.

Le corps 31 de l'élément femelle 3 comporte, au voisinage de l'extrémité avant 31A, une gorge périphérique interne 311 de réception d'un autre joint torique 38 prévu pour assurer l'étanchéité entre le corps 31 et la soupape 35 en configuration désaccouplée de l'élément femelle 3. Ainsi, la combinaison des joints 34 et 38 garantit l'étanchéité de l'élément femelle 3 en configuration désaccouplée.

L'élément mâle 5 comprend un corps 51 tubulaire à section circulaire, qui définit un volume intérieur 52 débouchant aux deux extrémités avant 51A et arrière 51 B du corps 51. Une canalisation aval C₂ est reliée au volume intérieur 52 au niveau de l'extrémité arrière 51 B du corps 51. Au niveau de son extrémité avant 51A, le corps 51 se prolonge en un poussoir 53 également tubulaire. Tel que représenté sur les figures 1 et 3, le poussoir 53 est monobloc avec le corps 51. Ces parties peuvent toutefois être formées par deux pièces distinctes assemblées entre elles.

L'élément mâle 5 comprend une soupape 55, disposée dans le volume intérieur 52 et mobile en translation, par rapport au corps 51 et au poussoir 53, parallèlement à l'axe X-X'. La soupape 55 est pleine et comporte une partie avant 551 cylindrique à section circulaire, qui définit une face avant 551A sensiblement plane de la soupape 55, et une partie arrière 553 aplatie selon une dimension radiale de la soupape 55. Comme il ressort de la figure 6, la soupape 55 comporte, de part et d'autre de la partie arrière 553, deux ailes de guidage 555 destinées à coopérer avec les surfaces internes du corps 51 et du poussoir 53 pour centrer la soupape 55 sur l'axe X-X' lors de ses déplacements par rapport aux parties 51 et 55.

Un ressort 57 exerce sur un épaulement externe 557 de chaque aile 555 un effort élastique de sorte que la face avant 551A de la soupape 55 est sensiblement alignée avec une face avant 53A sensiblement plane du poussoir 53 en configuration désaccouplée de l'élément 5. La face avant de l'élément mâle 5, définie par les faces avant 53A du poussoir 53 et 551A de la soupape 55, est alors sensiblement plane. Le poussoir 53 est pourvu d'une gorge périphérique interne 531 de réception d'un joint torique 54, propre à assurer l'étanchéité entre le poussoir 53 et la soupape 55 en configuration désaccouplée de l'élément mâle 5.

Dans ce mode de réalisation, la partie avant 551 de la soupape mâle 55 est de même diamètre extérieur D₁ que la partie pleine 331 du poussoir femelle 33. Par ailleurs, le diamètre intérieur d des joints 34 et 54, logés respectivement dans les gorges 351 et 531, est supérieur au diamètre extérieur D₂ de la partie creuse 333 du poussoir femelle 33. De manière avantageuse, le diamètre intérieur d des joints 34 et 54 est égal ou légèrement inférieur au diamètre extérieur D₁ de la partie 331 du poussoir femelle 33 et de la partie 551 de la soupape mâle 55.

Le corps 31 de l'élément femelle 3 est solidaire d'une première plaque 7 à connexions multiples, représentée partiellement en traits mixtes sur les figures 1 et 3 et qui porte plusieurs éléments mâles ou femelles de raccord. Par ailleurs, le corps 51 de l'élément mâle 5 est solidaire d'une deuxième plaque 9 à connexions multiples, représentée également en traits mixtes sur les figures 1 et 3 et portant des éléments de raccord complémentaires de ceux portés par la plaque 7.

Lorsqu'il convient d'accoupler les éléments 3 et 5 du raccord 1, ceux-ci sont rapprochés l'un de l'autre, comme représenté par les flèches F₁ de la figure 1, afin d'obtenir un emmanchement de l'élément mâle 5 dans l'élément femelle 3. La face avant 331A du poussoir femelle 33 vient au contact de la face avant 551A de la soupape mâle 55, de telle sorte que la soupape mâle 55, qui est mobile en translation parallèlement à l'axe X-X' à l'intérieur du poussoir mâle 53 et du corps mâle 51, est repoussée axialement vers l'extrémité arrière 51 B du corps 51 à l'encontre du ressort 57. Simultanément, la face avant 53A du poussoir mâle 53 vient au contact de la face avant 35A de la soupape femelle 35 et la soupape femelle 35, qui est mobile en translation parallèlement à l'axe X-X' à l'intérieur du corps femelle 31, est repoussée axialement vers l'extrémité arrière 31 B du corps 31 à l'encontre du ressort 37.

Lors de l'accouplement des éléments femelle 3 et mâle 5, les joints 34 et 54, logés respectivement dans les gorges 351 et 531, circulent le long de la surface périphérique externe du poussoir femelle 33. Plus spécifiquement, chaque joint 34 ou 54 circule successivement en regard de la surface périphérique externe de la partie pleine 331 du poussoir 33, puis en regard de la partie de raccordement délimitée par les pattes 338, jusqu'à parvenir en regard de la surface périphérique externe de la partie creuse 333 du poussoir 33 en configuration accouplée des éléments femelle 3 et mâle 5. Dans la configuration accouplée du raccord 1, le joint 38 logé dans le corps femelle 31 assure l'étanchéité du raccordement des éléments 3 et 5 en coopérant de manière étanche avec la surface périphérique externe du poussoir mâle 53.

Les évents 339 ménagés à l'arrière de la partie creuse 333 du poussoir femelle 33 permettent d'éviter une élévation de pression trop importante dans l'élément femelle 3 lors de l'accouplement. Une telle élévation de pression résulterait de la diminution du volume disponible pour le fluide à l'arrière de l'élément femelle 3 lors de la progression de la soupape 35 et du poussoir 53 vers l'arrière de cet élément, l'ensemble formé par les éléments 3 et 5 en cours d'accouplement étant par ailleurs étanche grâce au joint 38 à l'interface entre le corps femelle 31 et le poussoir mâle 53. Grâce aux évents 339, l'effort à fournir pour l'accouplement des éléments femelle 3 et mâle 5 n'est pas affecté par le déplacement de la soupape 35 et du poussoir 53 à l'intérieur du corps femelle 31.

En configuration accouplée du raccord 1, la face avant 31A du corps femelle 31 est disposée au voisinage d'un épaulement définissant la face avant 51A du corps mâle 51. Les plaques 7 et 9, solidaires respectivement de l'élément 3 et de l'élément 5, peuvent alors être solidarisées par des moyens non représentés, de manière à verrouiller le raccord 1 en configuration accouplée de ses éléments. Un jeu J est maintenu entre les extrémités 31A et 51A, afin de ne pas contrarier la solidarisation des plaques 7 et 9.

Dans la configuration accouplée visible à la figure 3, les joints 34 et 54 sont au contact du fluide mais sont protégés de la veine principale V de circulation du fluide dans le raccord 1, c'est-à-dire de la circulation de fluide à haut débit, par la partie creuse 333 du poussoir femelle 33. Plus spécifiquement, la partie creuse 333 fournit aux joints 34 et 54 une protection radiale par rapport à la veine principale V, car elle est intercalée radialement entre ces joints et le canal principal 32A de circulation du fluide. La partie creuse 333 fournit également une protection axiale aux joints 34 et 54 par rapport à la veine principale V, car ces joints sont disposés en retrait de l'extrémité avant 333A de la partie creuse 333 et des orifices d'écoulement du fluide définis entre chaque couple de pattes 338 de raccordement entre les parties pleine 331 et creuse 333. Dès lors, le fluide atteint les joints 34 et 54 à travers un passage de dimensions très inférieures à celles du canal principal 32A de circulation du fluide et des orifices d'écoulement, de telle sorte que l'effort exercé par le fluide sur les joints 34 et 54 est fortement réduit. Le risque d'expulsion des joints 34 et 54 hors de leurs gorges respectives 351 et 531 est alors minimisé, ce qui augmente la fiabilité de l'étanchéité du raccord 1.

Grâce à la différence de diamètres extérieurs D₁ et D₂ entre la partie creuse 333 du poussoir femelle 33, d'une part, et les parties 331 et 551, d'autre part, l'épaisseur radiale e₂ disponible pour les joints 34 et 54, entre le fond de leurs gorges de réception respectives 351 et 531 et la surface périphérique externe de la partie creuse 333, en configuration accouplée des éléments 3 et 5 du raccord 1 est supérieure à l'épaisseur radiale e₁ disponible pour les joints 34 et 54 en configuration désaccouplée de chaque élément 3 ou 5. Ainsi, les joints 34 et 54 sont soumis, lors de l'accouplement des éléments 3 et 5 et en configuration accouplée de ces éléments, à des étirements sensiblement réduits par rapport à ceux qu'ils subissent en configuration désaccouplée de chaque élément 3 ou 5. En particulier, dans ce mode de réalisation, le diamètre extérieur D₂ de la partie creuse 333 du poussoir femelle 33 est choisi inférieur de quelques dixièmes de millimètres, à savoir environ 0,25 mm dans l'exemple représenté, au diamètre intérieur d des joints 34 et 54, de telle sorte que les joints 34 et 54 sont confinés dans les gorges de réception 351 et 531 par la partie creuse 333, qui limite leur débattement radial hors de ces gorges, tout en n'étant soumis à aucun frottement ni étirement de la part de la partie creuse 333 qui les protège de la veine principale V de circulation du fluide en configuration accouplée des éléments 3 et 5. Il en résulte que, en cas de micromouvements relatifs des éléments 3 et 5 verrouillés à travers les plaques 7 et 9, les sollicitations sur les joints 34 et 54 sont minimisées, les joints n'étant par ailleurs pas fragilisés par leur propre étirement.

Au sens de l'invention, on entend par épaisseur radiale disponible pour un joint l'épaisseur radiale moyenne disponible pour ce joint. En configuration accouplée du raccord 1, la soupape femelle 35 peut ne pas être centrée autour de la partie creuse 333 du poussoir femelle 33. En effet, la soupape 35 est alors montée flottante dans le corps 31 et guidée uniquement par le ressort 37. Il en résulte que l'épaisseur radiale e₂ disponible pour le joint 34 en configuration accouplée peut être variable le long de la périphérie du joint 34. En particulier, l'épaisseur radiale e₂ peut être, localement, sensiblement égale, voire inférieure, à l'épaisseur radiale e₁ disponible en configuration désaccouplée de l'élément femelle 3. Toutefois, l'épaisseur radiale e₂ moyenne reste supérieure à l'épaisseur radiale e₁, ce qui garantit que le joint 34 est moins sollicité en configuration accouplée qu'en configuration désaccouplée.

Le choix du diamètre D₂ inférieur au diamètre d implique que les joints 34 et 54, logés respectivement dans les gorges 351 et 531, ne sont pas en contact avec la surface périphérique externe de la partie creuse 333 en configuration accouplée du raccord 1. L'absence de contact entre le joint 34 et la surface périphérique de la partie 333 est totale lorsque la soupape femelle 35 et le joint 34 sont centrés autour de la partie creuse 333. Un tel agencement est possible grâce à la présence du joint 38 qui assure l'étanchéité du raccord 1 en configuration accouplée. Les joints 34 et 54, qui n'ont pas pour fonction d'assurer l'étanchéité du raccord 1 en configuration accouplée, ne subissent ainsi aucune déformation ni frottement supplémentaire lors de l'accouplement des éléments 3 et 5, contrairement aux joints d'étanchéité du raccord décrit dans EP-A-0 477 949. Ceci permet de préserver la durée de vie des joints 34 et 54. La présence du joint 38 permet également de réduire l'encombrement axial du raccord 1 conforme à l'invention par rapport à une construction de raccord telle que décrite dans EP-A-0 477 949.

Dans ce mode de réalisation, et tel que représenté sur les figures 1 et 3, l'ouverture du circuit lors de l'accouplement des éléments 3 et 5 s'établit avant que les joints 34 et 54 ne se trouvent protégés de la veine principale V de circulation du fluide par la partie creuse 333 du poussoir femelle 33. Les pattes 338 de raccordement entre les parties pleine 331 et creuse 333 du poussoir femelle 33, qui sont en regard des joints 34 et 54 à l'ouverture du circuit, garantissent localement le confinement des joints 34 et 54 dans leurs gorges de réception respectives 351 et 531 et permettent d'empêcher une expulsion des joints 34 et 54 hors de ces gorges.

Selon une variante non représentée de l'invention, les pattes 338 peuvent être ménagées de telle sorte que la partie de raccordement qu'elles délimitent sur le poussoir femelle 33 présente, au moins partiellement, un diamètre extérieur égal au diamètre extérieur D₁ de la partie pleine 331 du poussoir femelle 33. Un tel profil des pattes 338 améliore le confinement des joints 34 et 54 dans leurs gorges respectives 351 et 531 lors de la phase transitoire d'accouplement des éléments 3 et 5, mais engendre des frottements supplémentaires exercés sur les joints 34 et 54.

Selon une autre variante non représentée de l'invention, les éléments femelle 3 et mâle 5 du raccord 1 peuvent être conçus de telle sorte que le fluide ne commence à circuler dans le raccord 1 en cours d'accouplement qu'une fois les joints 34 et 54 protégés radialement de la veine principale V par la partie creuse 333 du poussoir femelle 33. Il faut alors prévoir que la distance axiale a, prise entre l'extrémité arrière de la gorge 531 de réception du joint 54 et l'extrémité arrière 53B de la portion d'obturation du poussoir mâle 53, c'est-à-dire de la portion du poussoir 53 qui est apte à coopérer avec la surface périphérique externe de la partie pleine 331 du poussoir femelle 33, soit supérieure ou égale à la distance axiale b, prise entre les parties pleine 331 et creuse 333 du poussoir femelle 33, c'est-à-dire entre la zone de jonction des pattes 338 avec la partie pleine 331 et l'extrémité avant 333A de la partie creuse 333.

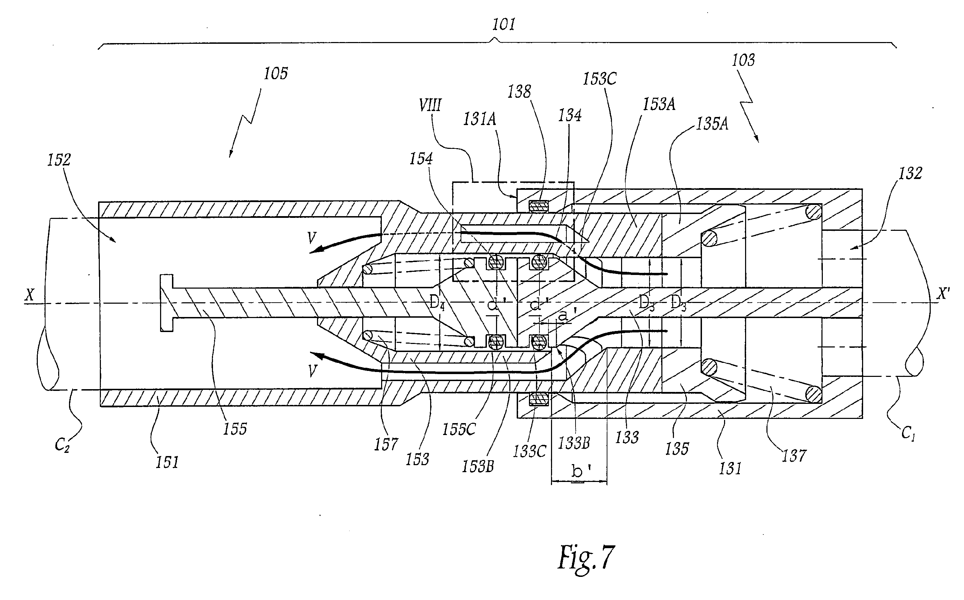

Dans le deuxième mode de réalisation représenté sur la figure 7, les éléments analogues au premier mode de réalisation portent des références identiques augmentées de 100. Le raccord 101 conforme à ce deuxième mode de réalisation comprend un élément femelle 103 et un élément mâle 105, prévus pour s'emmancher l'un dans l'autre dans la direction d'un axe X-X' longitudinal commun aux éléments 103 et 105.

L'élément femelle 103 comprend un corps 131 tubulaire à section circulaire, à l'arrière duquel est raccordée une canalisation amont C₁. Un poussoir 133, solidaire du corps 131, est disposé dans un volume intérieur 132 du corps 131. Sur la figure 7, le poussoir 133 est représenté monobloc avec le corps 131. Ces parties peuvent toutefois être formées par deux pièces distinctes assemblées entre elles.

L'élément femelle 103 comprend également une soupape 135 tubulaire à section circulaire, disposée dans le volume intérieur 132 autour du poussoir 133 et mobile en translation, par rapport au corps 131 et au poussoir 133, parallèlement à l'axe X-X'. La soupape 135 est chargée élastiquement par un ressort 137, de sorte qu'une face avant plane d'une partie avant 135A de la soupape 135 est sensiblement alignée, en configuration désaccouplée de l'élément femelle 103, avec une face avant plane 133A du poussoir 133.

Dans ce deuxième mode de réalisation, l'étanchéité entre le poussoir 133 et la soupape 135 en configuration désaccouplée de l'élément femelle 103 est assurée par un joint torique 134 logé dans une gorge périphérique externe 133C du poussoir 133. Le corps 131 comporte en outre, de manière analogue au premier mode de réalisation, une gorge périphérique interne disposée au voisinage de l'extrémité avant 131A du corps 131, qui reçoit un autre joint torique 138 propre à assurer l'étanchéité entre le corps 131 et la soupape 135 en configuration désaccouplée de l'élément femelle 103.

L'élément mâle 105 comprend un corps 151 tubulaire à section circulaire, à l'arrière duquel est raccordée une canalisation aval C₂ et qui se prolonge en un poussoir 153 au niveau de son extrémité avant. Tel que représenté sur la figure 7, le poussoir 153 est monobloc avec le corps 151. Ces parties peuvent toutefois être formées par deux pièces distinctes assemblées entre elles.

L'élément mâle 105 comprend également une soupape 155, disposée dans un volume intérieur 152 du corps 151 et mobile en translation, par rapport au corps 151 et au poussoir 153, parallèlement à l'axe X-X'. La soupape 155 est chargée élastiquement par un ressort 157, de sorte qu'une face avant plane 155A de la soupape 155 est sensiblement alignée, en configuration désaccouplée de l'élément mâle 105, avec une face avant plane de la partie avant 153A du poussoir 153. Un joint torique 154, propre à assurer l'étanchéité entre le poussoir 153 et la soupape 155 en configuration désaccouplée de l'élément mâle 105, est logé dans une gorge périphérique externe 155C de la soupape 155.

Le poussoir 153 comprend une partie avant 153A pleine et une partie arrière 153B creuse, reliées l'une à l'autre par trois pattes 153C de raccordement régulièrement réparties sur la périphérie interne du poussoir 153. La partie pleine 153A présente un diamètre intérieur D₃ inférieur au diamètre intérieur D₄ de la partie creuse 153B, les pattes 153C de raccordement entre les parties 153A et 153B définissant une enveloppe cylindrique de même diamètre intérieur D₃ que la partie pleine 153A. En variante, l'enveloppe cylindrique définie par les pattes 153C peut être au moins partiellement de diamètre intérieur égal au diamètre intérieur D₄ de la partie creuse 153B, de manière à réduire les frottements exercés sur les joints 134 et 154 dans la phase transitoire d'accouplement des éléments 103 et 105. Comme dans le premier mode de réalisation, les pattes 153C s'étendent sensiblement parallèlement à l'axe X-X' et présentent une section transversale constante sur toute leur longueur.

Dans ce mode de réalisation, la partie avant 135A de la soupape femelle 135 est de même diamètre intérieur D₃ que la partie pleine 153A du poussoir mâle 153. De manière avantageuse, le diamètre extérieur d' des joints 134 et 154, logés respectivement dans les gorges 1 33C et 155C, est inférieur au diamètre intérieur D₄ de la partie creuse 153B du poussoir mâle 153 et égal ou légèrement supérieur au diamètre intérieur D₃ des parties 135A et 153A.

L'accouplement des éléments 103 et 105 du raccord 101 est obtenu de manière analogue au premier mode de réalisation, par emmanchement de l'élément mâle 105 dans l'élément femelle 103, ce qui résulte en un coulissement des soupapes de chaque élément. De manière similaire au premier mode de réalisation, des évents non représentés peuvent être prévus à l'arrière de la partie creuse 153B du poussoir mâle 153, afin de limiter une élévation de pression dans le raccord lors de l'accouplement des éléments 103 et 105.

Dans la configuration accouplée visible sur la figure 7, le joint 138 logé dans le corps femelle 131 assure l'étanchéité du raccordement des éléments 103 et 105 en coopérant de manière étanche avec la surface périphérique externe du poussoir mâle 153. Les joints 134 et 154 sont alors protégés de la veine principale V de circulation du fluide dans le raccord 101 par la partie creuse 153B du poussoir mâle 153 qui, comme dans le premier mode de réalisation, fournit aux joints 134 et 154 une double protection radiale et axiale par rapport à la veine principale V tout en limitant le débattement radial possible des joints 134 et 154 hors de leurs gorges de réception respectives 133C et 155C, ce qui limite le risque d'expulsion des joints 134 et 154 hors de ces gorges. La différence de diamètres intérieurs D₃ et D₄ entre la partie creuse 153B, d'une part, et les parties 153A et 135A, d'autre part, permet d'allouer aux joints 134 et 154 une épaisseur radiale e₄ disponible en configuration accouplée, entre le fond des gorges 133C et 155C de réception des joints et la surface périphérique interne de la partie creuse 153B, supérieure à l'épaisseur radiale e₃ disponible en configuration désaccouplée de chaque élément 103 ou 105, avec des avantages similaires à ceux du premier mode de réalisation.

Dans l'exemple représenté sur la figure 7, l'ouverture du circuit intervient, comme dans le premier mode de réalisation, avant que les joints 134 et 154 ne se trouvent protégés par la partie creuse 153B du poussoir mâle 153, l'expulsion des joints 134 et 154 étant empêchée grâce aux pattes 153C. Le confinement des joints 134 et 154 est maximal car la partie de raccordement entre les parties 153A et 153B, délimitée par les pattes 153C, est de diamètre intérieur égal à D₃. Toutefois, les éléments 103 et 105 peuvent également être conçus de sorte que le fluide ne commence à circuler dans le raccord 101 en cours d'accouplement qu'une fois les joints 134 et 154 protégés, en prévoyant une distance axiale a', prise entre l'extrémité arrière de la gorge 133C de réception du joint 134 et l'extrémité arrière 133B de la portion d'obturation du poussoir femelle 133, c'est-à-dire de la portion du poussoir 133 qui est apte à coopérer avec la surface périphérique interne de la partie pleine 153A du poussoir mâle 153, supérieure ou égale à la distance axiale b', prise entre les parties pleine 153A et creuse 153B du poussoir mâle 153, c'est-à-dire entre la zone de jonction des pattes 153C avec la partie pleine 153A et l'extrémité avant de la partie creuse 153B.

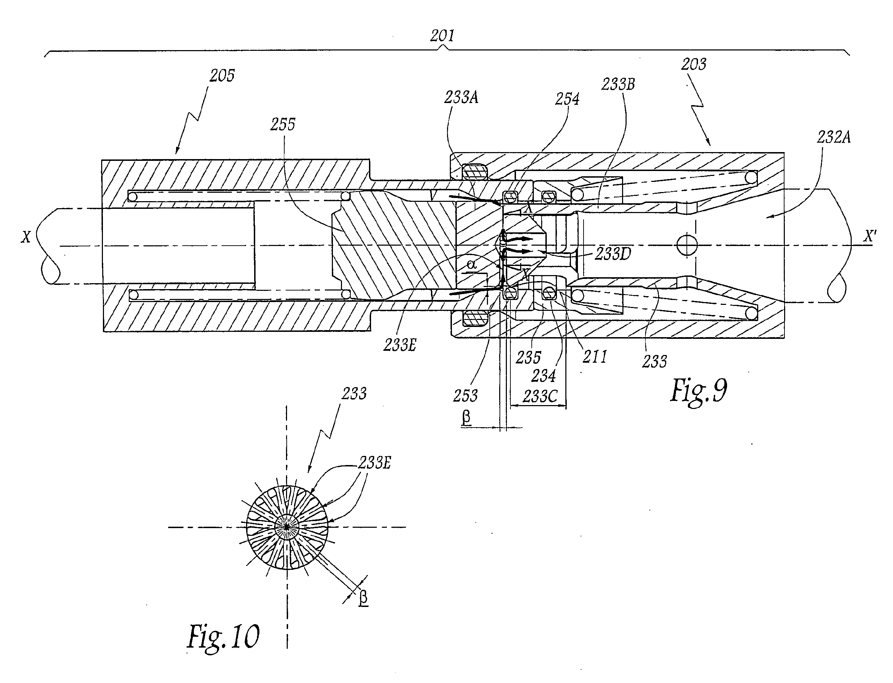

Dans le troisième mode de réalisation représenté sur les figures 9 et 10, les éléments analogues à ceux du premier mode de réalisation portent des références identiques augmentées de 200. Le raccord 201 conforme à ce troisième mode de réalisation comprend un élément femelle 203 et un élément mâle 205, prévus pour s'emmancher l'un dans l'autre dans la direction d'un axe X-X' longitudinal commun. Les éléments du raccord 201 se distinguent des éléments du raccord 1 du premier mode de réalisation en ce que le poussoir 233 de l'élément femelle 203 comporte des orifices de déviation d'une partie de l'écoulement de fluide, en phase transitoire d'accouplement du raccord, à l'écart du joint monté sur le poussoir de l'élément mâle.

Plus précisément, de manière analogue au premier mode de réalisation, le poussoir 233 comprend une partie pleine 233A et une partie creuse 233B, reliées l'une à l'autre par trois pattes 233C de raccordement régulièrement réparties sur la périphérie externe du poussoir 233. La portion arrière conique de la partie pleine 233A comporte un alésage central 233D, qui est relié au canal principal d'écoulement 232A délimité par le poussoir 233 et destiné au passage du fluide. Une extrémité avant de l'alésage 233D est raccordée à des orifices de déviation 233E, percés dans la partie pleine 233A, entre l'extrémité avant de la partie pleine 233A et l'extrémité avant des pattes de raccordement 233C.

Comme visible sur la figure 10, le poussoir 233 comporte quinze orifices de déviation 233E, répartis régulièrement sur la section de la partie pleine 233A, chaque orifice 233E étant dirigé selon une direction radiale de la partie 233A, de manière à créer un passage d'écoulement annexe du fluide entre le canal principal 232A et l'espace radial qui est délimité, lors de l'accouplement des éléments du raccord 201, entre le poussoir 233 de l'élément femelle 203 et le poussoir 253 de l'élément mâle 205. En particulier, chaque orifice de déviation 233E débouche radialement, au niveau de la surface périphérique externe du poussoir 233, au moins partiellement en regard de la gorge de réception du joint 254 qui est porté par le poussoir 253 de l'élément mâle 205, lorsque ce joint 254 parvient au niveau des pattes de raccordement 233C. Ainsi, les orifices 233E sont aptes à dévier une partie de l'écoulement de fluide lorsque le joint 254 parvient au niveau des pattes de raccordement 233C.

De plus, comme montré sur la figure 9, chaque orifice de déviation 233E débouche au niveau d'une portion du poussoir 233 qui présente un diamètre extérieur égal au diamètre extérieur de la partie creuse 233B et au diamètre extérieur de la partie du poussoir 233 délimitée par les pattes de raccordement 233C. Ainsi, l'épaisseur radiale disponible pour le joint 254 au niveau des orifices de déviation 233E, prise entre le fond de la gorge de réception du joint 254 et la surface périphérique externe du poussoir 233, est supérieure à l'épaisseur radiale disponible pour le joint 254 en configuration désaccouplée des éléments du raccord 201. Dès lors, les sollicitations du joint 254 en frottement contre les bords des orifices de déviation 233E sont limitées lors de l'accouplement des éléments de raccord.

Chaque orifice 233E est conçu avec une section transversale β supérieure à la section transversale α d'un interstice radial 211 de passage de fluide délimité entre le poussoir 233 de l'élément femelle 203 et le poussoir 253 de l'élément mâle 205, lors de l'accouplement des éléments du raccord 201. Plus précisément, l'interstice radial 211 est un interstice radial moyen entre la surface périphérique externe du poussoir 233 qui est située à l'arrière par rapport aux orifices 233E et la surface périphérique interne du poussoir 253 qui est située en regard de celle-ci. A titre d'exemple, dans ce mode de réalisation, la section β de chaque orifice de déviation 233E est sensiblement égale au double de la section transversale α de l'interstice radial 211. De plus, la section de l'alésage central 233D est dimensionnée en fonction du nombre et de la section des orifices de déviation 233E, de manière à ne pas limiter l'écoulement de fluide depuis ou vers les orifices 233E. Ainsi, lorsque le joint 254 porté par le poussoir 253 de l'élément mâle 205 parvient au niveau des pattes de raccordement 233C, l'écoulement de fluide dans le raccord est canalisé de manière préférentielle à travers les orifices de déviation 233E et l'alésage central 233D de la partie pleine 233A, plutôt qu'à travers l'interstice radial 211. Il en résulte un écoulement de fluide limité au contact du joint 254. Toutefois, la section β de chaque orifice de déviation 233E est choisie avec une valeur relativement faible, de manière à limiter la fragilisation du poussoir 233.

La présence des orifices de déviation 233E est particulièrement avantageuse lorsqu'il existe un différentiel de pression interne important entre l'élément mâle et l'élément femelle d'un raccord conforme à l'invention, préalablement à l'accouplement des éléments de raccord. En particulier, lorsque la pression interne de l'élément mâle 205 est supérieure à la pression interne de l'élément femelle 203, comme représenté sur la figure 9, le joint 254 est susceptible d'être déformé par la circulation de fluide et d'être éjecté hors de sa gorge de réception au niveau des pattes de raccordement 233C. En effet, lors de l'accouplement, lorsque le joint 254 parvient au niveau des pattes de raccordement 233C qui correspondent à une section d'écoulement de fluide plus importante, le fluide en circulation tend, en l'absence d'orifices de déviation 233E et pour un différentiel de pression interne important entre les éléments de raccord, à solliciter fortement le joint 254, qui est dès lors susceptible d'être altéré. Au contraire, lorsque des orifices de déviation 233E sont fournis, l'écoulement de fluide est canalisé préférentiellement à l'écart du joint 254, à travers les orifices de déviation 233E et l'alésage central 233D, ce qui permet de limiter l'écoulement au contact du joint 254, qui est ainsi protégé. Le joint 234 porté par la soupape 235 de l'élément femelle 203 n'est pas soumis à de telles sollicitations de la part du fluide en circulation car, lorsque le joint 234 parvient au niveau des pattes de raccordement 233C, le joint 254 assure l'étanchéité du raccord 201.

Comme il ressort des trois modes de réalisation de l'invention décrits ci-dessus, un élément de raccord et un raccord conformes à l'invention permettent de garantir une bonne stabilité, dans leurs logements, des joints d'interface entre les poussoirs et les soupapes, lors de l'accouplement des éléments du raccord et en configuration accouplée du raccord. En outre, grâce à la géométrie adaptée de la pièce 333 ou 153B de protection des joints, l'épaisseur radiale conférée aux joints en configuration accouplée du raccord est suffisante pour éliminer tout risque de détérioration des joints du fait de frottements avec la pièce de protection.

Par ailleurs, le profil des pattes de raccordement entre les parties pleine et creuse de la pièce de protection, qui est obtenu par fraisage, permet de limiter les fragilisations des joints résultant de frottements entre les joints et les pattes lors de l'accouplement des éléments de raccord. La section transversale relativement faible de ces pattes contribue à réduire les frottements subis par les joints, en limitant les surfaces de contact entre les joints et les pattes. De plus, les joints ont tendance, lors de leur progression axiale le long des pattes, à retrouver leur géométrie de repos au niveau des orifices d'écoulement. Or, les pattes étant de section transversale constante, les déformations des joints lors de leur progression le long des pattes sont réduites, ce qui limite la fragilisation des joints.

L'invention n'est pas limitée aux exemples décrits et représentés. En particulier, un raccord conforme à l'invention peut ne comprendre qu'un seul élément de raccord pourvu d'une soupape d'obturation du circuit parmi ses deux éléments. De plus, des orifices de déviation d'une partie de l'écoulement de fluide à l'écart des joints, analogues aux orifices 233E décrits dans le troisième mode de réalisation, peuvent être prévus pour le raccord 101 du deuxième mode de réalisation. Ces orifices de déviation sont alors aménagés dans la partie pleine 153A du poussoir 153 de l'élément mâle 105, entre l'extrémité avant de la partie pleine 153A et les pattes de raccordement 153C, de manière à déboucher radialement au niveau de la surface périphérique interne de la partie pleine 153A. De tels orifices de déviation créent ainsi, comme dans le troisième mode de réalisation, un passage d'écoulement annexe du fluide en circulation depuis ou vers le volume intérieur 152 du corps mâle 151. Quel que soit le mode de réalisation, le nombre d'orifices de déviation du poussoir, 233 ou 153, peut également être différent du nombre d'orifices 233E décrit dans le troisième mode de réalisation. En particulier, il est avantageux de munir le poussoir précité d'au moins un orifice de déviation.

Selon une variante non représentée de l'invention, les pièces se repoussant lors de l'accouplement des éléments d'un raccord conforme à l'invention peuvent également présenter des diamètres différents, à la différence des deux modes de réalisation décrits précédemment, dans lesquels les poussoirs et soupapes en appui relatif lors de l'accouplement des éléments mâle et femelle sont prévus avec des diamètres égaux. A titre d'exemple, dans le premier mode de réalisation, le diamètre extérieur de la partie avant 551 de la soupape mâle 55 peut être supérieur au diamètre extérieur de la partie avant 331 du poussoir femelle 33, la position des joints 34 et 54 étant adaptée de manière à garantir l'étanchéité du raccord en cours d'accouplement.

En outre, selon une autre variante non représentée de l'invention, les joints d'interface entre poussoirs et soupapes peuvent être différents d'un élément du raccord à l'autre. En particulier, ces joints d'interface peuvent être prévus avec des diamètres intérieurs et/ou des diamètres de tore différents d'un élément du raccord à l'autre, le jeu de fonctionnement entre le poussoir et la soupape d'un élément du raccord n'étant pas forcément identique à celui de l'autre élément. Ainsi, selon une variante non représentée de l'invention, les diamètres d ou d' des joints d'interface, ainsi que les épaisseurs radiales e₁, e₂ ou e₃, e₄ disponibles pour les joints d'interface, peuvent être différents pour le joint d'interface d'un premier élément du raccord et le joint d'interface du deuxième élément, tout en garantissant la réduction des efforts exercés par le fluide sur les joints d'interface et le confinement de ces joints dans leurs gorges de réception lors de l'accouplement des éléments du raccord et en configuration accouplée du raccord.

Par ailleurs, le nombre de pattes de raccordement entre les parties pleine et creuse de la pièce de protection des joints peut être différent de trois. Toutefois, un compromis optimal entre le maintien des joints dans leurs logements lors de l'accouplement des éléments de raccord et une perturbation minimale de la circulation du fluide, notamment à haut débit, est avantageusement atteint avec trois pattes de raccordement. Les éléments de raccord peuvent également être de sections autres que circulaires.

Enfin, le fluide a été représenté sur les figures circulant de l'élément femelle vers l'élément mâle du raccord. Toutefois, la circulation du fluide dans un raccord conforme à l'invention peut s'opérer indifféremment dans ce sens ou dans le sens contraire.

## Revendications

1. Elément femelle ou mâle (3 ; 105 ; 203) de raccord (1 ; 101 ; 201) destiné à la jonction amovible de canalisations (C₁, C₂) parcourues par un fluide sous pression, ledit élément femelle ou mâle (3 ; 105 ; 203) étant apte à être accouplé avec un élément mâle ou femelle (5 ; 103 ; 205) de raccord correspondant, ledit élément femelle ou mâle (3 ; 105 ; 203) comprenant un poussoir (33 ; 153 ; 233) et une soupape d'obturation (35 ; 155 ; 235) apte à coulisser axialement par rapport au poussoir pour l'accouplement dudit élément (3 ; 105 ; 203), ledit élément femelle ou mâle (3 ; 105 ; 203) comprenant en outre au moins un joint (34 ; 154 ; 234) d'étanchéité, reçu dans une gorge périphérique (351 ; 155C) d'une première pièce (35 ; 155 ; 235) parmi le poussoir ou la soupape et propre à coopérer de manière étanche avec une première partie (331 ; 153A ; 233A) de la deuxième pièce (33 ; 153 ; 233) parmi le poussoir ou la soupape en configuration désaccouplée dudit élément (3 ; 105 ; 203), alors que, en configuration accouplée dudit élément (3 ; 105 ; 203), une pièce (333 ; 153B ; 233B) de protection du joint (34 ; 154 ; 234), appartenant audit élément (3 ; 105 ; 203), est intercalée radialement entre le joint (34 ; 154 ; 234) et une veine principale (V) de circulation du fluide dans ledit élément (3 ; 105 ; 203), la pièce de protection étant une deuxième partie (333 ; 153B ; 233B) de la deuxième pièce (33 ; 153 ; 233), les première (331 ; 153A ; 233A) et deuxième (333 ; 153B ; 233B) parties de la deuxième pièce (33 ; 153 ; 233) étant de dimensions radiales (D₁, D₂; D₃, D₄) différentes et l'épaisseur radiale (e₂ ; e₄) disponible pour le joint (34 ; 154 ; 234) en configuration accouplée dudit élément (3 ; 105 ; 203) étant supérieure à l'épaisseur radiale (e₁ ; e₃) disponible pour le joint (34 ; 154 ; 234) en configuration désaccouplée dudit élément (3 ; 105 ; 203), les première (331 ; 153A ; 233A) et deuxième (333 ; 153B ; 233B) parties de la deuxième pièce (33 ; 153 ; 233) étant reliées l'une à l'autre par des pattes (338 ; 153C ; 233C) de raccordement, **caractérisé en ce que** chaque patte (338 ; 153C ; 233C) de raccordement est de section transversale constante sur toute sa longueur.

2. Elément de raccord selon la revendication 1, **caractérisé en ce qu'**un diamètre (d ; d') du joint (34 ; 154 ; 234) logé dans une gorge périphérique (351 ; 155C) de la pièce (35 ; 155 ; 235) sur laquelle il est monté et un diamètre (D₂ ; D₄) de la pièce (333 ; 153B ; 233B) de protection sont tels que le joint (34 ; 154 ; 234) n'est pas en contact avec la pièce (333 ; 153B ; 233B) de protection en configuration accouplée dudit élément (3 ; 105 ; 203).

3. Elément de raccord selon l'une quelconque des revendications précédentes, **caractérisé en ce que** la partie de la deuxième pièce (33 ; 153 ; 233) délimitée par les pattes (338 ; 153C ; 233C) de raccordement est au moins partiellement de dimensions radiales égales à celles (D₂ ; D₄) de la deuxième partie (333 ; 153B ; 233B).

4. Elément de raccord selon l'une quelconque des revendications précédentes, **caractérisé en ce que** la deuxième pièce (33 ; 153 ; 233) comporte trois pattes (338 ; 153C ; 233C) de raccordement régulièrement réparties sur la périphérie de la deuxième pièce.

5. Elément de raccord selon l'une quelconque des revendications précédentes, **caractérisé en ce que** le joint (34 ; 234) est reçu dans une gorge périphérique (351) interne de la soupape (35 ; 235) et coopère de manière étanche avec une surface périphérique externe d'une partie pleine (331 ; 233A) du poussoir (33 ; 233) en configuration désaccouplée dudit élément (3 ; 203), la pièce de protection étant une partie creuse (333 ; 233B) du poussoir (33 ; 233), les parties pleine (331 ; 233A) et creuse (333 ; 233B) du poussoir (33 ; 233) étant reliées par les pattes (338 ; 233C) de raccordement, la partie pleine (331 ; 233A) étant de dimensions radiales (D₁) supérieures à celles (D₂) de la partie creuse (333 ; 233B).

6. Elément de raccord selon l'une quelconque des revendications précédentes, **caractérisé en ce que** la deuxième pièce (233) comporte, au niveau de sa première partie (233A), au moins un orifice (233E) qui débouche radialement à une position qui est comprise, selon la direction longitudinale (X-X') dudit élément (203), entre l'extrémité avant de la deuxième pièce (233) et l'extrémité avant des pattes (233C) de raccordement.

7. Elément de raccord selon la revendication 6, **caractérisé en ce que** chaque orifice (233E) de la deuxième pièce (233) est débouchant au niveau d'une portion de la deuxième pièce (233) qui est de dimensions radiales égales à celles de la deuxième partie (233B) de la deuxième pièce.

8. Elément de raccord selon l'une quelconque des revendications 6 ou 7, **caractérisé en ce que** chaque orifice (233E) de la deuxième pièce (233) a une section transversale (β) supérieure à la section transversale (α) d'un interstice radial (211) délimité entre la deuxième pièce (233) et une pièce (253) adjacente à la deuxième pièce (233) lors de l'accouplement dudit élément (203) avec un élément (205) de raccord correspondant.

9. Elément de raccord selon l'une quelconque des revendications précédentes, **caractérisé en ce qu'**il comprend un autre joint d'étanchéité (38), fixe par rapport à un corps (31) dudit élément (3 ; 203) et destiné à assurer l'étanchéité du raccord (1 ; 201) obtenu par accouplement dudit élément (3 ; 203) avec un élément (5 ; 205) de raccord correspondant.

10. Elément de raccord selon l'une quelconque des revendications précédentes, **caractérisé en ce que** la face avant de l'élément (3 ; 105 ; 203) définie par les faces avant (331A, 35A ; 155A) du poussoir (33 ; 153 ; 233) et de la soupape (35 ; 155 ; 235) en configuration désaccouplée de l'élément est sensiblement plane.

11. Raccord (1 ; 101 ; 201) pour la jonction amovible de canalisations (C₁, C₂) parcourues par un fluide sous pression, comprenant un élément femelle (3 ; 103 ; 203) et un élément mâle (5 ; 105 ; 205) aptes à être accouplés l'un avec l'autre, **caractérisé en ce qu'**au moins un (3 ; 105 ; 203) des éléments du raccord (1 ; 101 ; 201) est selon l'une quelconque des revendications précédentes.

12. Raccord selon la revendication 11, **caractérisé en ce que** le deuxième élément (5 ; 103 ; 205) du raccord (1 ; 101 ; 201) comprend un poussoir (53 ; 133 ; 253) et une soupape d'obturation (55 ; 135 ; 255) apte à coulisser axialement par rapport au poussoir pour l'accouplement des deux éléments (3, 5 ; 103, 105 ; 203, 205) du raccord, le deuxième élément (5 ; 103 ; 205) comprenant en outre au moins un joint (54 ; 134 ; 254) d'étanchéité, monté sur une pièce (53 ; 133 ; 253) parmi le poussoir ou la soupape du deuxième élément et propre à assurer l'étanchéité entre le poussoir (53 ; 133 ; 253) et la soupape (55 ; 135 ; 255) en configuration désaccouplée du deuxième élément (5 ; 103 ; 205), la pièce (333 ; 153B ; 233B) de protection du premier élément (3 ; 105 ; 203) étant intercalée radialement, en configuration accouplée du raccord (1 ; 101 ; 201), entre le joint (54 ; 134 ; 254) du deuxième élément et une veine principale (V) de circulation du fluide dans le raccord, l'épaisseur radiale (e₂; e₄) disponible pour le joint (54 ; 134 ; 254) du deuxième élément en configuration accouplée du raccord (1 ; 101 ; 201) étant supérieure à l'épaisseur radiale (e₁; e₃) disponible pour le joint (54 ; 134 ; 254) du deuxième élément en configuration désaccouplée du deuxième élément (5 ; 103 ; 205).

13. Raccord selon la revendication 12, **caractérisé en ce que** le poussoir (33 ; 153 ; 233) du premier élément (3 ; 105 ; 203) est propre à coopérer avec la soupape (55 ; 135 ; 255) du deuxième élément (5 ; 103 ; 205), et le poussoir (53 ; 133 ; 253) du deuxième élément (5 ; 103 ; 205) avec la soupape (35 ; 155 ; 235) du premier élément (3 ; 105 ; 203), pour l'accouplement des deux éléments (3, 5 ; 103, 105 ; 203, 205) du raccord (1 ; 101 ; 201).

14. Raccord selon l'une quelconque des revendications 12 ou 13, **caractérisé en ce que** la distance axiale (a) entre une extrémité arrière d'une gorge (531 ; 133C) de réception du joint (54 ; 134 ; 254) du deuxième élément (5 ; 103 ; 205) et une extrémité arrière (53B ; 133B) d'une portion d'obturation de la pièce (53 ; 133 ; 253) du deuxième élément sur laquelle est monté le joint (54 ; 134 ; 254) est supérieure ou égale à la distance axiale (b) entre les première (331 ; 153A ; 233A) et deuxième (333 ; 153B ; 233B) parties de la pièce (33 ; 153 ; 233) du premier élément (3 ; 105 ; 203) formant la pièce (333 ; 153B ; 233B) de protection.

## Claims

1. A female or male coupling element (3; 105; 203) for a coupling (1; 101; 201) for releasably connecting together pipes (C₁, C₂) conveying a fluid under pressure, said female or male element (3; 105; 203) being suitable for being coupled with a corresponding male or female coupling element (5; 103, 205), said female or male element (3; 105; 203) including a pusher (33; 153; 233) and a shutter valve (35; 155; 235) suitable for sliding axially relative to the pusher during coupling of said element (3; 105; 203), said female or male element (3; 105; 203) further including at least one sealing O-ring (34; 154; 234) received in a peripheral groove (351; 155C) of a first part (35; 155; 235) selected from the pusher and the valve and suitable for co-operating in leaktight manner with a first portion (331; 153A; 233A) of the second part (33; 153; 233) selected from the pusher and the valve in the uncoupled configuration of said element (3; 105; 203), whereas, in the coupled configuration of said element (3; 105; 203), a protection part (333; 153B; 233B) for protecting the O-ring (34; 154; 234) and forming a portion of said element (3; 105; 203) is radially interposed between the O-ring (34; 154; 234) and a main fluid flow (V) in said element (3; 105; 203), the protection part being a second portion (333; 153B; 233B) of the second part (33; 153; 233), the first and second portions (331; 153A; 233A; 333; 153B; 233B) of the second part (33; 153; 233) having radial dimensions (D₁, D₂; D₃, D₄) that are different, and the radial thickness (e₂; e₄) available for the O-ring (34; 154; 234) in the coupled configuration of said element (3; 105; 203) being greater than the radial thickness (e₁; e₃) available for the O-ring (34; 154; 234) in the uncoupled configuration of said element (3; 105; 203), the first and second portions (331; 153A; 233A; 333; 153B; 233B) of the second part (33; 153; 233) being connected to each other by connection tabs (338; 153C; 233C), and the element being **characterized in that** each connection tab (338; 153C; 233C) is of cross-section that is constant along its entire length.

2. A coupling element according to claim 1, **characterized in that** a diameter (d; d') of the O-ring (34; 154; 234) housed in a peripheral groove (351; 155C) of the part (35; 155; 235) on which it is mounted, and a diameter (D₂; D₄) of the protection part (333; 153B; 233B) are such that the O-ring (34; 154; 234) is not in contact with the protection part (333; 153B; 233B) in the coupled configuration of said element (3; 105; 203).

3. A coupling element according to either preceding claim, **characterized in that** the portion of the second part (33; 153; 233) defined by the connection tabs (338; 153C; 233C) is at least partially of radial dimensions that are equal to those (D₂; D₄) of the second portion (333; 153B; 233B).

4. A coupling element according to any preceding claim, **characterized in that** the second part (33; 153; 233) has three connection tabs (338; 153C; 233C) regularly distributed around the periphery of the second part.

5. A coupling element according to any preceding claim, **characterized in that** the O-ring (34; 234) is received in an inner peripheral groove (351) of the valve (35; 235) and co-operates in leaktight manner with an outer peripheral surface of a solid portion (331; 233A) of the pusher (33; 233) in the uncoupled configuration of said element (3; 203), the protection part being a hollow portion (333; 233B) of the pusher (33; 233), the solid and hollow portions (331; 233A; 333; 233B) of the pusher (33; 233) being connected together by the connection tabs (338; 233C), the solid portion (331; 233A) being of radial dimensions (D₁) greater than the radial dimensions (D₂) of the hollow portion (333; 233B).

6. A coupling element according to any preceding claim, **characterized in that** the second part (233) includes, in said first portion (233A), at least one orifice (233E) opening out radially in a position that lies, along the longitudinal axis (X-X') of said element (203) between the front end of the second part (233) and the front end of the connection tabs (233C).

7. A coupling element according to claim 6, **characterized in that** each orifice (233E) of the second part (233) opens out in a portion of the second part (233) that is of radial dimensions equal to the radial dimensions of the second portion (233B) of the second part.

8. A coupling element according to claim 6 or claim 7, **characterized in that** each orifice (233E) of the second part (233) has a cross-section (β) greater than the cross-section (α) of a radial gap (211) defined between the second part (233) and a part (253) adjacent to the second part (233) during coupling of said element (203) with a corresponding coupling element (205).

9. A coupling element according to any preceding claim, **characterized in that** it includes another sealing O-ring (38) that is stationary relative to a body (31) of said element (3; 203) and that is designed to provide sealing for the coupling (1; 201) obtained by coupling said element (3; 203) with a corresponding coupling element (5; 205).

10. A coupling element according to any preceding claim, **characterized in that** the front face of the element (3; 105; 203) defined by the front faces (331A, 35A; 155A) of the pusher (33; 153; 233) and of the valve (35; 155; 235) in the uncoupled configuration of the element is substantially plane.

11. A coupling (1; 101; 201) for releasably joining pipes (C₁, C₂) conveying a fluid under pressure, the coupling comprising a female element (3; 103; 203) and a male element (5; 105; 205) suitable for being coupled together, the coupling being **characterized in that** at least one (3; 105; 203) of the coupling elements (1; 101; 201) is an element in accordance with any preceding claim.

12. A coupling according to claim 11, **characterized in that** the second element (5; 103; 205) of the coupling (1; 101; 201) includes a pusher (53; 133. 253) and a shutter valve (55; 135; 255) suitable for sliding axially relative to the pusher for coupling the two elements (3, 5; 103, 105; 203, 205) of the coupling together, the second element (5; 103; 205) further including at least one sealing O-ring (54; 134; 254) mounted on one part (53; 133; 253) selected from the pusher and the valve of the second element and suitable for providing sealing between the pusher (53; 133. 253) and the valve (55; 135; 255) in the uncoupled configuration of the second element (5; 103; 205), the protection part (333; 153B; 233B) of the first element (3; 105; 203) being interposed radially in the coupled configuration of the coupling (1; 101; 201) between the O-ring (54; 134; 254) of the second element and a main fluid flow (V) in the coupling, the radial thickness (e₂; e₄) available for the O-ring (54; 134; 254) of the second element in the coupled configuration of the coupling (1; 101; 201) being greater than the radial thickness (e₁; e₃) available for the O-ring (54; 134; 254) of the second element in the uncoupled configuration of the second element (5; 103; 205).

13. A coupling according to claim 12, **characterized in that** the pusher (33; 153; 233) of the first element (3; 105; 203) is suitable for co-operating with the valve (55; 135; 255) of the second element (5; 103; 205), and the pusher (53; 133; 253) of the second element (5; 103; 205) is suitable for co-operating with the valve (35; 155; 235) of the first element (3; 105; 203) for coupling together the two elements (3, 5; 103, 105; 203, 205) of the coupling (1; 101; 201).

14. A coupling according to claim 12 or claim 13, **characterized in that** the axial distance (a) between a rear end of a groove (531; 133C) for receiving the O-ring (54; 134; 254) of the second element (5; 103; 205) and a rear end (53B; 133B) of a shutter portion of the part (53; 133; 253) of the second element on which the O-ring (54; 134; 254) is mounted is greater than or equal to the axial distance (b) between the first and second portions (331; 153A; 233A; 333; 153B; 233B) of the part (33; 153; 233) of the first element (3; 105; 203) forming the protection part (333; 153B; 233B).

## Patentansprüche

1. Aufnahme- oder Einsteckelement (3; 105; 203) einer Kupplung (1; 101; 201), die zur lösbaren Verbindung von von einem unter Druck stehenden Fluid durchströmten Leitungen (C₁, C₂) dient, wobei das Aufnahme- oder Einsteckelement (3; 105; 203) geeignet ist, mit einem korrespondierenden Einsteck- oder Aufnahmeelement (5; 103; 205) der Kupplung gekoppelt zu werden und wobei das Aufnahme- oder Einsteckelement (3; 105; 203) einen Stößel (33; 153; 233) und ein Verschlussventil (35; 155; 235) umfasst, das geeignet ist, axial In Bezug auf den Stößel für die Kopplung des Elements (3; 105; 203) zu gleiten, wobei das Aufnahme- oder Einsteckelement (3; 105; 203) darüber hinaus mindestens eine Dichtung (34; 154; 234) umfasst, die in einer Umfangsnut (351; 155C) eines ersten Teils (35; 155; 235) der Teile Stößel und Ventil aufgenommen ist und geeignet ist, in dichtender Weise mit einem ersten Bereich (331; 153A; 233A) des zweiten Teils (33; 153; 233) der Teile Stößel und Ventil in entkoppelter Anordnung des Elements (3; 105; 203) zusammenzuwirken, während in gekoppelter Anordnung des Elements (3; 105; 203) ein Teil (333; 153B, 233B) zum Schutz der Dichtung (34; 154; 234), das zu dem Element (3; 105; 203) gehört, radial zwischen der Dichtung (34; 154; 234) und einem Hauptstrom (V) der Strömung des Fluids in dem Element (3; 105; 203) angeordnet ist, wobei das Teil zum Schutz ein zweiter Bereich (333; 153B; 233B) des zweiten Teils (33; 153; 233) ist, der erste (331; 153A; 133A) und zweite (333; 153B; 233B) Bereich des zweiten Teils (33; 153; 233) unterschiedliche radiale Abmessungen (D₁, D₂; D₃, D₄) haben und die für die Dichtung (34; 154; 234) in der gekoppelten Anordnung des Elements (3; 105; 203) zur Verfügung stehende radiale Dicke (e; e₃) größer ist als die für die Dichtung (34; 154; 234) in entkoppelter Anordnung des Elements (3; 105; 203) zur Verfügung stehende radiale Dicke (e₁; e₃), wobei der erste (331; 153A; 233A) und der zweite (333; 153B; 233B) Bereich des zweiten Teils (33; 153; 233) miteinander durch Verbindungsstücke (338; 153C; 233C) verbunden sind, **dadurch gekennzeichnet, dass** jedes Verbindungsstück (338; 153C; 233C) über seine gesamte Länge einen konstanten Querschnitt aufweist.

2. Kupplungselement nach Anspruch 1, **dadurch gekennzeichnet, dass** ein Durchmesser (d; d') der in einer Umfangsnut (351; 155C) angeordneten Dichtung (34; 154; 234) des Teils (35; 155; 235), an dem sie angeordnet Ist, und ein Durchmesser (D₂; D₄) des Teils (333; 153B, 233B) zum Schutz derart sind, dass die Dichtung (34; 154; 234) nicht in Kontakt mit dem Teil (333; 153B; 233B) zum Schutz in gekoppelter Anordnung des Elements (3; 105; 103) ist.

3. Kupplungselement nach einem beliebigen der vorhergehenden Ansprüche, **dadurch gekennzeichnet, dass** der Bereich des zweiten Teils (33; 153; 233), der von den Verbindungsstücken (338; 153C, 233C) begrenzt ist, zumindest teilweise radiale Abmessungen aufweist, die gleich denen (D₂; D₄) des zweiten Bereichs (333; 153B, 233B) sind.

4. Kupplungselement nach einem beliebigen der vorhergehenden Ansprüche, **dadurch gekennzeichnet, dass** das zweite Teil (33; 153; 233) drei Verbindungsstücke (338; 153C; 233C) umfasst, die gleichmäßig über den Umfang des zweiten Teils verteilt sind.

5. Kupplungselement nach einem beliebigen der vorhergehenden Ansprüche, **dadurch gekennzeichnet, dass** die Dichtung (34; 234) in einer inneren Umfangnut (351) des Ventils (35; 235) aufgenommen ist und in dichtender Weise mit einer äußeren Umfangsfläche eines massiven Bereichs (331; 233A) des Stößels (33; 233) in entkoppelter Anordnung des Elements (3; 203) zusammenwirkt, wobei das Teil zum Schutz ein ausgehöhlter Bereich (333; 233B) des Stößels (33; 233) ist und der massive (331; 233A) und ausgehöhlte (333; 233B) Bereich des Stößels (33; 233) durch die Verbindungsstücke (338; 233C) verbunden sind und der massive Bereich (331; 233A) radiale Abmessungen (D₁) aufweist, die größer als die (D₂) des ausgehöhlten Bereichs (333; 233B) sind.

6. Kupplungselement nach einem beliebigen der vorhergehenden Ansprüche, **dadurch gekennzeichnet, dass** das zweite Teil (233) an seinem ersten Bereich (233A) mindestens eine Öffnung (233E) aufweist, die radial an einer Position mündet, die gemäß der Längsrichtung (X-X') des Elements (203) zwischen dem vorderen Ende des zweiten Teils (233) und dem vorderen Ende der Verbindungsstücke (233C) liegt.

7. Kupplungselement nach Anspruch 6, **dadurch gekennzeichnet, dass** jede Öffnung (233E) des zweiten Teils (233) an einem Abschnitt des zweiten Teils (233) mündet, der von radialen Abmessungen gleich denen des zweiten Bereichs (233B) des zweiten Teils sind.

8. Kupplungselement nach einem beliebigen der Ansprüche 6 oder 7, **dadurch gekennzeichnet, dass** jede Öffnung (233E) des zweiten Teils (233) einen Querschnitt (β) größer als der Querschnitt (α) eines radialen Zwischenraums (211) aufweist, der zwischen dem zweiten Teil (233) und einem Teil (253), benachbart zum zweiten Teil (233) bei der Koppelung des Elements (203) mit einem korrespondierenden Kupplungselement (205) begrenzt ist.

9. Kupplungselement nach einem beliebigen der vorhergehenden Ansprüche, **dadurch gekennzeichnet, dass** es eine andere, in Bezug auf einen Körper (31) des Elements (3; 203) feststehende Dichtung (38) umfasst, die zur Sicherstellung der Dichtigkeit der durch die Kopplung des Elements (3; 203) mit dem korrespondierenden Kupplungselement (5; 205) erhaltenen Kupplung (1; 201) dient.

10. Kupplungselement nach einem beliebigen der vorhergehenden Ansprüche, **dadurch gekennzeichnet, dass** die Vorderfläche des Elements (3; 105; 203), die durch die Vorderflächen (331A, 35A; 155A) des Stößels (33; 153; 233) und des Ventils (35; 155; 235) in der entkoppelten Anordnung des Elements definiert ist, im Wesentlichen eben ist.

11. Kupplung (1; 101; 201) für die lösbare Verbindung von von einem unter Druck stehenden Fluid durchströmten Leitungen (C₁; C₂), die ein Aufnahmeelement (3; 103; 203) und ein Einsteckelement (5; 105; 205) umfasst, die geeignet sind, miteinander gekoppelt zu werden, **dadurch gekennzeichnet, dass** mindestens eines (3; 105; 203) der Kupplungselemente (1; 101; 201) nach einem beliebigen der vorhergehenden Ansprüche ausgebildet ist.

12. Kupplung nach Anspruch 11, **dadurch gekennzeichnet, dass** das zweite Element (5; 103; 205) der Kupplung (1;101; 201) einen Stößel (53; 133; 253) und ein Verschlussventil (55; 135; 255) umfasst, das geeignet Ist, axial in Bezug auf den Stößel für das Koppeln der zwei Elemente (3, 5; 103, 105; 203, 205) der Kupplung axial zu gleiten, wobei das zweite Element (5; 103; 205) darüber hinaus mindestens eine Dichtung (54; 134; 254) umfasst, die an einem Teil (53; 133; 253) der Teile Stößel und Ventil des zweiten Elements montiert ist und geeignet ist, die Dichtigkeit zwischen dem Stößel (53; 133; 253) und dem Ventil (55; 135; 255) in der entkoppelten Anordnung des zweiten Elements (5; 103; 205) sicherzustellen, das Teil (333; 153B; 233B) zum Schutz des ersten Elements (3; 105; 203) in der gekoppelten Anordnung der Kupplung (1; 101; 201) radial zwischen der Dichtung (54; 134; 254) des zweiten Elements und einem Hauptstrom (V) der Strömung des Fluids in der Kupplung liegt, wobei die für die Dichtung (54; 134; 254) des zweiten Elements in der gekoppelten Anordnung der Kupplung (1; 101; 201) zur Verfügung stehende radiale Dicke (e₂; e₄) größer ist als die für die Dichtung (54; 134; 254) des zweiten Elements in der entkoppelten Anordnung des zweiten Elements (5; 103; 205) zur Verfügung stehende radiale Dicke (e₁; e₃).

13. Kupplung nach Anspruch 12, **dadurch gekennzeichnet, dass** der Stößel (33; 153; 233) des ersten Elements (3; 105; 203) geeignet ist, mit dem Ventil (55; 135; 255) des zweiten Elements (5; 103; 105) und der Stößel (53; 133; 253) des zweiten Elements (5; 103; 205) mit dem Ventil (35; 155; 235) des ersten Elements (3; 105; 203) für die Kopplung der zwei Elemente (3, 5; 103, 105; 203, 205) der Kupplung (1; 101; 201) zusammenzuwirken.

14. Kupplung nach einem beliebigen der Ansprüche 12 oder 13, **dadurch gekennzeichnet, dass** die axiale Distanz (a) zwischen einem hinteren Ende einer Nut (531; 133C) zur Aufnahme der Dichtung (54; 134; 254) des zweiten Elements (5; 103; 205) und einem hinteren Ende (53B, 133B) eines Verschlussbereichs des Teils (53; 133; 253) des zweiten Elements, an dem die Dichtung (54; 134; 254) montiert ist, größer als oder gleich der axialen Distanz (b) zwischen dem ersten (331; 153A, 233A) und dem zweiten (333; 153B; 233B) Bereich des Teils (33; 153; 233) des ersten Elements (3; 105; 203), der das Teil (333; 153B, 233B) zum Schutz bilden, ist.
